# FASCICULE DE BREVET EUROPEEN

(11) **EP 3 257 345 B1**
(45) Date de publication et mention de la délivrance du brevet: **23.10.2019**
(21) Numéro de dépôt: 17174667.0
(22) Date de dépôt: 07.06.2017
(51) Int. Cl.: A01B 29/04

(54) **ORGANE ROULANT AGRICOLE**
LANDWIRTSCHAFTLICHER ROLLKÖRPER
AGRICULTURAL ROLLING MEMBER

(30) Priorité: 14.06.2016 FR 1655513
(43) Date de publication de la demande: 20.12.2017
(73) Titulaire: OTICO, 77650 Chalmaison (FR)
(72) Inventeur: PHELY, Olivier, 77520 Thénisy (FR)
(74) Mandataire: Cabinet Netter

(56) Documents cités:
- EP-A1- 2 145 775
- DE-B- 1 038 810
- US-B1- 6 295 939

## Description

L'invention concerne un outil agricole du type comprenant un corps de roue et un pneumatique monté autour de ce corps de roue.

Généralement, le corps de roue présente une structure rigide, par exemple réalisée en métal ou en plastique. Le pneumatique présente une structure souple prévue pour travailler le sol. Il est par exemple réalisé en élastomère.

En travail, le corps de roue et le pneumatique se comportent très différemment l'un de l'autre. Le pneumatique tend à se séparer en partie au moins du corps de roue. On parle de "*déjantage*". Le pneumatique se détériore. L'outil n'est plus fonctionnel.

Un serrage radial du pneumatique sur le corps de roue est à lui seul généralement insuffisant pour empêcher un déjantage en fonctionnement. On cherche donc à verrouiller le corps de roue et le pneumatique l'un avec l'autre au moins radialement.

Un tel verrouillage se fait habituellement par coopération de forme entre le pneumatique et le corps de roue. Le talon du pneumatique, c'est-à-dire sa portion radialement interne, est conformé de façon à présenter au moins une surface annulaire de retenue orientée radialement vers l'extérieur. Cette surface coopère avec une surface annulaire homologue du corps de roue, orientée radialement vers l'intérieur. Ces surfaces de retenue forment ensemble un verrou qui empêche le pneumatique de s'écarter du corps de roue en travail.

Souvent, le talon présente une section transversale dont l'allure rappelle celle d'un "champignon" tandis que le corps de roue présente en sa périphérie une section en forme de crochets. Une partie des surfaces des crochets et une partie des surfaces de la forme de champignon forment des surfaces de retenue qui coopèrent mutuellement. D'autres formes de section complexes peuvent être mises en œuvre.

La complexité des formes du talon tend à augmenter les coûts et les temps de fabrication du corps de roue et du pneumatique. Elle limite les formes industriellement réalisables pour la bande de roulement.

Les documents DE 10 38 810, EP 2 145 775 et US 6 295 939 montrent des exemples d'organe roulant agricole de l'art antérieur.

L'invention vient améliorer la situation.

La demanderesse propose un outil agricole comprenant :
- un corps de roue présentant deux faces principales et une gorge périphérique ouverte radialement vers l'extérieur ménagée entre les deux faces principales,
- un pneumatique incluant une partie externe sensiblement annulaire et un talon faisant saillie de la partie externe radialement vers l'intérieur, le talon étant conformé de manière à se loger dans la gorge au montage du pneumatique autour du corps de roue, et
- un verrou radial bloquant le pneumatique autour du corps de roue.

Le verrou radial comprend :
- un premier orifice ménagé dans le corps de roue débouchant d'une part dans la gorge et d'autre part dans l'une des deux faces principales,
- au moins un second orifice ménagé dans le talon du pneumatique et ouvert sensiblement en regard du premier orifice, et
- une goupille disposée dans le premier orifice et le second orifice.

Un tel outil agricole présente une meilleure résistance au déjantage que ceux existants, notamment ceux dont le pneumatique comprend un talon en forme de champignon. En outre, le corps de roue et le pneumatique de l'outil agricole proposé peuvent être dépourvus de surface en contre dépouille, ce qui en facilite le démoulage et en réduit le coût de fabrication. Le verrou radial ainsi configuré assure également un verrouillage axial et un verrouillage anti rotation du pneumatique par rapport au corps de roue. Selon d'autres aspects, la demanderesse propose un corps de roue pour outil agricole, un pneumatique pour outil agricole, un kit d'outil agricole et un procédé de fabrication d'un outil agricole.

Le corps de roue présente deux faces principales et une gorge périphérique ouverte radialement vers l'extérieur ménagée entre les deux faces principales. La gorge périphérique est conformée de manière à recevoir un talon d'un pneumatique au montage dudit pneumatique autour du corps de roue. Au moins un premier orifice est ménagé dans le corps de roue débouchant d'une part dans la gorge et d'autre part dans l'une des deux faces principales.

Le pneumatique pour outil agricole inclut une partie externe sensiblement annulaire et un talon faisant saillie de la partie externe radialement vers l'intérieur. Le talon est conformé de manière à se loger dans une gorge d'un corps de roue au montage du pneumatique autour dudit corps de roue. Au moins un orifice est ménagé dans le talon et s'ouvrant dans une surface latérale du talon.

Le kit d'outil agricole comprend un corps de roue et au moins une goupille. Le corps de roue présente deux faces principales et une gorge périphérique ouverte radialement vers l'extérieur et ménagée entre les deux faces principales. La gorge périphérique est conformée de manière à recevoir un talon d'un pneumatique au montage dudit pneumatique autour du corps de roue. Au moins un premier orifice est ménagé dans le corps de roue débouchant d'une part dans la gorge et d'autre part dans l'une des deux faces principales. L'au moins une goupille est agencée pour s'insérer dans l'au moins un premier orifice du corps de roue depuis la face principale en faisant saillie dans la gorge périphérique.

Le procédé de fabrication de l'outil agricole peut être décomposé selon les étapes suivantes :
a) mouler par injection le corps de roue,
b) démouler le corps de roue,
c) placer le pneumatique autour du corps de roue sur au moins une partie de la circonférence du corps de roue, le placement du pneumatique autour du corps de roue incluant l'insertion du talon dans la gorge périphérique,
d) insérer au moins une goupille depuis l'une des faces principales du corps de roue, au travers du corps de roue, jusqu'à faire saillie dans la gorge périphérique en pénétrant au moins partiellement dans le talon de manière à former un verrou radial bloquant le pneumatique autour du corps de roue.

Les caractéristiques suivantes, seules ou en combinaison les unes avec les autres, sont optionnelles :
- La gorge du corps de roue est dépourvue de surface de retenue orientée radialement vers l'intérieur.
- Un orifice supplémentaire est ménagé dans le corps de roue débouchant dans la gorge sensiblement en regard de l'au moins un premier orifice.
- L'orifice supplémentaire est traversant et débouche en outre dans une des faces principales du corps principal.
- Au moins un premier orifice et/ou l'orifice supplémentaire du corps de roue est pourvu d'un filetage.
- Le talon du pneumatique est dépourvu de surface de retenue orientée radialement vers l'extérieur.
- L'au moins une goupille du kit comprend au moins une portion filetée de manière à pouvoir fixer par vissage la goupille au corps de roue.
- Dans le kit, le corps de roue comprend deux flasques formant respectivement l'une et l'autre des deux faces principales à l'état assemblés l'un avec l'autre. La goupille est agencée de manière à maintenir les deux flasques assemblés l'un à l'autre.
- Le kit comprend en outre au moins un pneumatique tel que défini ci-avant.

D'autres caractéristiques, détails et avantages de l'invention apparaîtront à la lecture de la description détaillée ci-après, et des dessins annexés, sur lesquels :
- la figure 1 montre une vue en perspective éclatée d'un outil selon l'invention,
- la figure 2 montre une vue en perspective de l'outil de la figure 1,
- la figure 3 montre une vue de côté de l'outil de la figure 1,
- la figure 4 montre une vue en coupe selon le segment IV de la figure 3,
- la figure 5 montre une vue du détail V de la figure 4,
- la figure 6 montre une vue de côté d'une pièce de l'outil de la figure 1,
- la figure 7 montre une vue de côté de la pièce de la figure 6,
- la figure 8 montre une vue du détail VIII de la figure 6,
- la figure 9 montre une vue en perspective de la pièce de la figure 6,
- les figures 10 à 14 montrent des figures équivalentes à la figure 5 de différents outils selon l'invention, et
- les figures 15 et 16 montrent des variantes de réalisation d'un outil selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

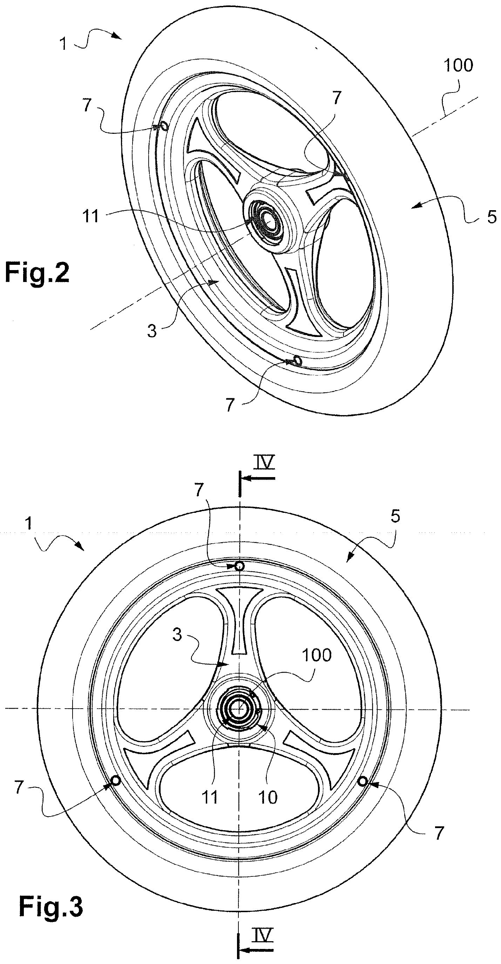

Sur les figures 2 à 5 et 10 à 14, les outils sont représentés à l'état opérationnel non chargé, c'est-à-dire non appuyés sur le sol.

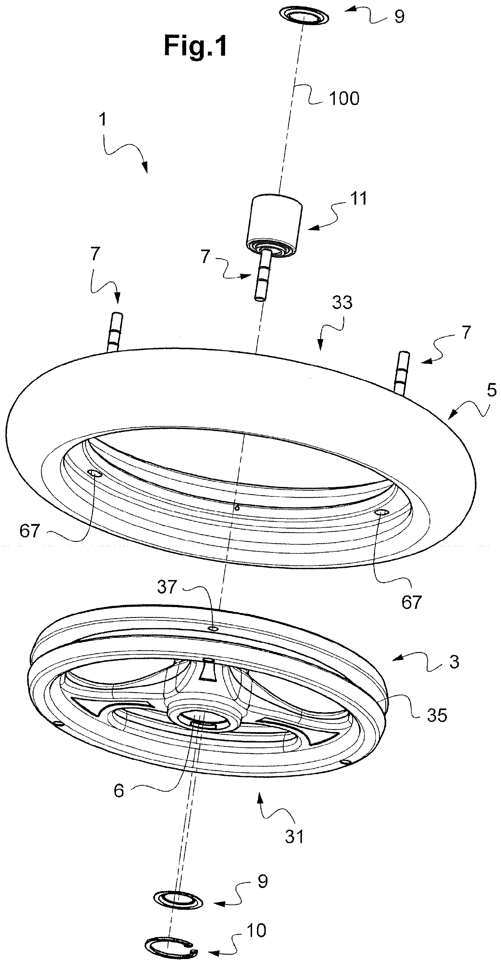

Les figures 1 à 5 représentent un outil agricole sous la forme d'une roue 1. La roue 1 comprend un corps de roue 3, un pneumatique 5, des goupilles 7, des rondelles 9, un circlip 10 et un ensemble de roulement 11.

La roue 1 présente une forme de révolution autour d'un axe de révolution 100, correspondant à l'axe de rotation de la roue 1 une fois montée sur un essieu. La roue 1 présente un plan médian 200 perpendiculaire à l'axe de révolution 100. Le plan médian 200 forme sensiblement un plan de symétrie de la roue 1.

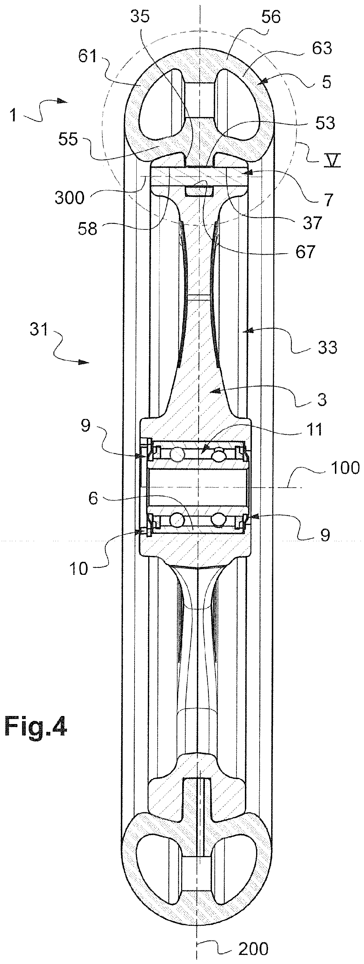

Le corps de roue 3 présente deux faces principales 31 et 33 mutuellement opposées et une gorge périphérique 35. Conformément à l'orientation de la roue 1 en figure 4, la première face principale 31 forme ici une face gauche tandis que la seconde face principale 33 forme ici une face droite. La gorge périphérique 35 est ouverte radialement vers l'extérieur et ménagée entre les deux faces principales 31 et 33. La gorge périphérique 35 est conformée de manière à recevoir un talon 53 du pneumatique 5, lequel se monte autour du corps de roue 3.

Le pneumatique 5 comprend une partie externe 51, ou corps de pneumatique, sensiblement annulaire. Le talon 53 fait saillie de la partie externe 51 radialement vers l'intérieur. Le talon 53 est conformé de manière à se loger dans la gorge périphérique 35 du corps de roue 3.

Dans l'exemple décrit ici, le corps de roue 3 est d'un seul tenant. Le pneumatique 5 se monte sur le corps de roue 5 en déformant élastiquement le pneumatique 5 de manière à venir placer le talon 53 dans la gorge périphérique 35. Le pneumatique 5 se démonte du corps de roue de la même manière.

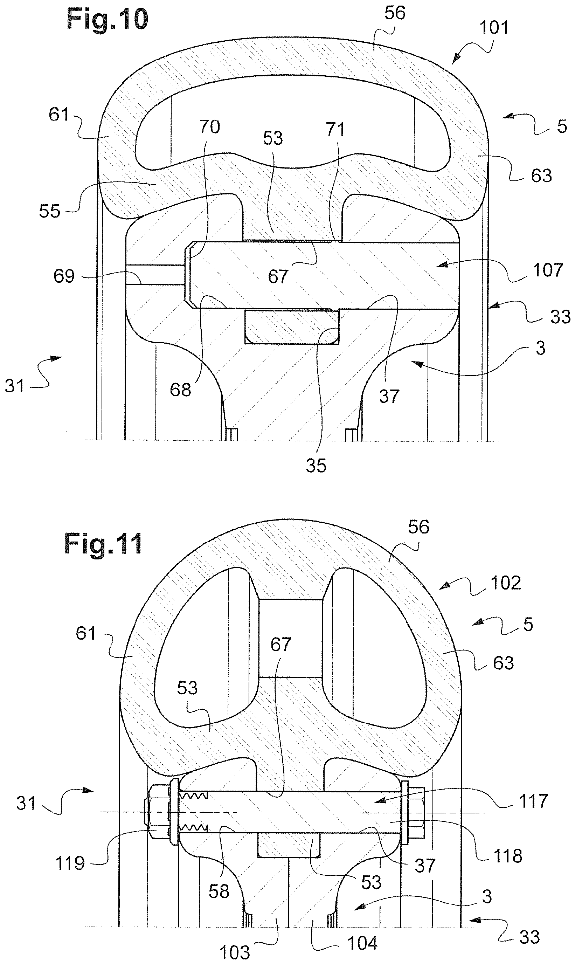

En variante, le corps de roue 3 est réalisé par assemblage de plusieurs pièces. Par exemple, le corps de roue 3 représenté en figure 11 est obtenu par assemblage de deux flasques 103, 104 homologues selon un plan de jonction correspondant sensiblement au plan médian 200. Chacun des flasques 103, 104 forme respectivement l'une et l'autre des deux faces principales 31, 33. Les flasques 103, 104 sont maintenus l'un contre l'autre par des couples boulon-écrou. Dans ce cas, le talon 53 du pneumatique 5 est disposé entre les flasques 103, 104 lors de leur assemblage mutuel. La réalisation du corps de roue 3 peut, par exemple, comprendre des découpes et emboutissages de plaques métalliques ou des moulages de pièces en plastique.

Ici, le corps de roue 3 présente un voile ouvert et un moyeu. Le voile de roue peut aussi être plein. Le corps de roue 3 est réalisé par moulage, ici par injection. Le corps de roue 3 est réalisé en matière plastique. Le corps de roue 3 peut être réalisé par d'autres méthodes et/ou dans d'autres matériaux.

Dans l'exemple décrit ici, le moyeu du corps de roue 3 présente un alésage aligné avec l'axe de révolution 100. L'alésage est conformée en un logement 6 recevant l'ensemble de roulement 11. Au montage, l'ensemble de roulement 11 est inséré dans le logement 6, entre les deux rondelles 9, depuis la première face principale 31 vers la seconde face principale 33 jusqu'à venir en butée axiale. Puis, le circlip 10 est disposé dans une rainure annulaire du logement 6 pour former butée axiale pour l'ensemble de roulement 11 et s'opposer à son extraction. L'ensemble de roulement 11 présente une ouverture traversante agencée pour s'enfiler sur un essieu de machine agricole. La configuration du logement 6 dans le moyeu et la position du circlip 10 forment des exceptions au caractère symétrique de la roue 1 selon le plan médian 200. En variante, le moyeu peut présenter une configuration différente. Par exemple, le corps de roue 3 peut être dépourvu de moyeu. Le corps de roue peut présenter un voile de roue avec une portion centrale sensiblement évidée. Un moyeu réalisé en une pièce distincte du corps de roue peut ensuite être assemblé au voile de roue.

Dans l'exemple décrit ici, le pneumatique 5 est du type semi-creux. La partie externe 51 comprend une semelle 55, une bande de roulement 56 et une paire de flancs 61, 63. Les flancs 61, 63 relient la semelle 55 à la bande de roulement 56. Les flancs 61, 63, la semelle 55 et la bande de roulement 56 forment conjointement une enveloppe. Cette enveloppe délimite un espace intérieur. L'espace intérieur est généralement annulaire et continu dans la circonférence du pneumatique 5. Ici, une ouverture, visible en partie inférieure de la figure 4, met en communication fluidique l'espace intérieur avec l'extérieur. Une telle ouverture est par exemple obtenue en disposant une aiguille au travers de la semelle 55 et du talon 53 au cours du moulage du pneumatique 5. Grâce à cette ouverture, le pneumatique 5 n'est ni gonflable, ni gonflé. Le caractère non gonflé du pneumatique 5 facilite la déformation au cours du travail, ce qui améliore le décollage de la terre qui pourrait s'accumuler sur les surfaces extérieures du pneumatique 5. Ici, l'ouverture est décalée du plan médian 200 et forme une exception au caractère symétrique de la roue 1 selon le plan médian 200. En variante, plusieurs ouvertures sont prévues et/ou l'ouverture est centrée dans la semelle 55.

Le pneumatique 5 est réalisé en élastomère, par exemple en caoutchouc ou en polyuréthane. Ici, le pneumatique 5 est réalisé à base d'un élastomère de dureté Shore A comprise entre 40 et 75, par exemple 65 Shore.

La forme et la composition de la partie externe 51 du pneumatique 5 peuvent varier en fonction des applications prévues pour l'outil agricole, comme cela apparaît par exemple sur les figures 10 à 14. En variante, le pneumatique 5 peut être gonflable ou même plein. Le diamètre interne de la semelle 55 du pneumatique 5 au repos est sensiblement inférieur au diamètre externe du corps de roue 3. Une fois monté sur le corps de roue 3, le pneumatique 5 se trouve dans un état contraint, étiré selon sa circonférence. Le pneumatique 5 est serré autour du corps de roue 3 par retour élastique. Ceci améliore la résistance au déjantage.

Dans les exemples décrits ici, la forme du profil du talon 53, c'est-à-dire son contour vu en section radiale, est dépourvue de surface de retenue orientée radialement vers l'extérieur. La largeur du talon 53, c'est-à-dire sa dimension selon une direction sensiblement parallèle à l'axe de révolution 100, décroit ou reste constante depuis la semelle 55 jusqu'à l'extrémité radialement interne du talon 53. Dans les exemples représentés sur les figures, la largeur du talon 53 est égale sur toute sa hauteur, c'est-à-dire le long de sa direction radiale. L'absence de contre-dépouille facilite la fabrication.

La gorge périphérique 35 du corps de roue 3 est dépourvue de surface de retenue radiale, c'est-à-dire de surface orientée radialement vers l'intérieur. En effet, toute surface dont l'orientation est au moins partiellement orientée vers l'axe de révolution 100 peut former surface de retenue radiale pour le talon 53 du pneumatique 5. La largeur de la gorge périphérique 35 est croissante, ou constante comme dans les exemples des figures, depuis le fond de la gorge périphérique 35 jusqu'à son extrémité radialement externe. Grâce à une telle configuration de la gorge périphérique 35, aucune surface en contre-dépouille ne vient complexifier le démoulage. Le moulage et le démoulage du corps de roue 3, notamment par injection, sont facilités.

Les formes précitées du talon 53 et de la gorge 35 se distinguent des configurations connues, notamment de celles dans lesquelles le talon du pneumatique présente une excroissance, par exemple en forme de "champignon", tandis que la gorge de forme complémentaire qui le reçoit présente un fond large et une portion fine, ou portion d'étranglement. Dans ces configurations connues, la portion d'étranglement et le fond large se raccordent nécessairement par au moins une surface orientée radialement vers l'intérieur, souvent en forme d'épaulement, et qui forme constitue donc une surface de retenue radiale pour le talon. Les formes dépourvues de surface de retenue radiale, facilitent l'insertion et le retrait du talon 53 dans la gorge 35. Les opérations de maintenance sont facilitées. Cet aspect est particulièrement avantageux lorsque le pneumatique 5 doit être déformé élastiquement pour être monté autour du corps de roue 3, par exemple lorsque le corps de roue 3 est réalisé d'un seul tenant.

Dans les cas d'un corps de roue 3 d'un seul tenant, l'absence de surface de retenue radiale et donc de surface en contre-dépouille autorise un moulage par injection et d'un seul tenant du corps de roue sans difficulté particulière. Un procédé de fabrication d'un corps de roue 3 peut comprendre une unique étape de moulage par injection. À l'issue de l'étape de moulage, une pièce monobloc est formée. La pièce monobloc porte les deux faces principales 31 et 33 et présente la gorge périphérique 35. La pièce monobloc issue du moulage correspond sensiblement au corps de roue 3 définitif. Facultativement, des opérations d'usinage et/ou de finition peuvent avoir lieu. Une étape postérieure supplémentaire d'assemblage de deux pièces, telles que deux flasques, est superflue. Par comparaison, les corps de roue présentant des surfaces de retenue dans une gorge périphérique peuvent difficilement être fabriqués d'un seul tenant par moulage par injection, sauf à concevoir des moules en plusieurs parties démontables, particulièrement complexes et coûteux. En effet, la partie du moule formant la rainure, ou noyau, est prisonnière des surfaces de retenue radiales lors du démoulage.

L'outil agricole présente un verrou radial bloquant le pneumatique 5 autour du corps de roue 3 à l'état opérationnel. Le verrou radial comprend une paire d'orifices 37, 67, ou trous, ménagés respectivement dans le corps de roue 3 et le pneumatique 5 et au moins une goupille 7, ou pion, inséré dans la paire d'orifices 37, 67. Ici, le verrou comprend trois paires d'orifices 37, 67 et trois goupilles 7, ou pions.

Pour chaque paire, un premier orifice 37 est ménagé dans le corps de roue 3 débouchant d'une part dans la gorge périphérique 35 et d'autre part dans l'une des deux faces principales 31, 33. Dans les exemples représentés sur les figures, le premier orifice 37 est sensiblement cylindrique et débouche dans la seconde face principale 33. Un second orifice 67 est ménagé dans le talon 53 du pneumatique 5. Le second orifice 67 présente une embouchure orientée sensiblement selon la direction de l'axe de révolution 100. Le second orifice 67 s'ouvre sur au moins un des deux côtés du talon 53. Lors du montage du pneumatique 5 autour du corps de roue 3, le premier orifice 37 et le second orifice 67 se positionnent sensiblement dans le prolongement l'un de l'autre, selon l'axe 300 représenté en figure 4. Pour passer à l'état opérationnel du verrou, tel que représenté sur les figures 2 à 5, la goupille 7, ici en forme de barreau, est insérée dans le premier orifice 37 et le second orifice 67.

Dans l'exemple des figures 1 à 9, le second orifice 67 est semblable au premier orifice 37. Il est par exemple formé lors du moulage du pneumatique 5. Lors de l'assemblage, le talon 53 est disposé dans la gorge périphérique 35 de sorte que le premier orifice 37 et le second orifice 67 d'une paire soient sensiblement dans l'alignement l'un de l'autre. La goupille 7 peut ensuite être introduite dans le premier orifice 37, ici depuis la seconde face principale 33, jusqu'à venir en saillie dans la gorge périphérique 35 et s'insérer dans le second orifice 67 du talon 53. Le verrouillage radial est opérationnel.

En variante, le premier orifice 37 et le second orifice 67 présentent des formes différentes l'une de l'autre. Par exemple, l'un au moins du premier orifice 37 et du second orifice 67 présente un contour de forme oblongue, ou allongée, dans la circonférence plutôt que circulaire, par exemple en forme de "haricot". Ainsi, la mise en regard du premier orifice 37 et du second orifice 67 est facilitée lors du montage du pneumatique 5. Au montage du pneumatique 5 sur le corps de roue 3, on cherche à mettre en regard le premier orifice 37 et le second orifice 67, sensiblement alignés s'ils ont la même forme, pour pouvoir y introduire la goupille 7. Le contour oblong permet d'augmenter la tolérance de ce positionnement relatif. Par exemple, le contour oblong peut s'étendre sur un secteur angulaire autour de l'axe de révolution 100 supérieur à 5°.

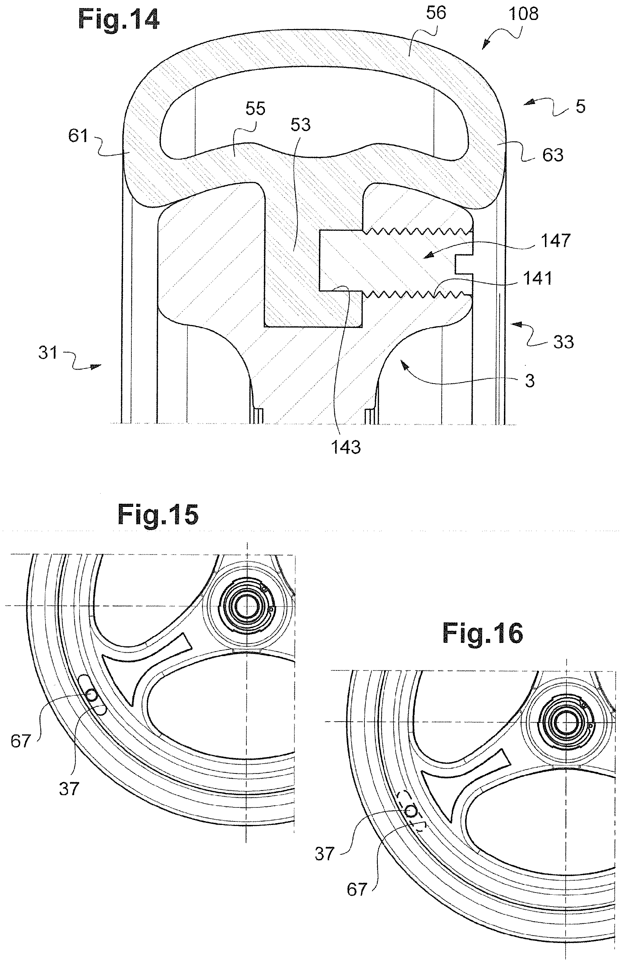

Sur la figure 15, le premier orifice 37 du corps de roue 3 présente une forme de haricot tandis que le second orifice 67 dans le talon 53 présente une forme circulaire. La goupille 7 n'est pas représentée. Sur la figure 16, le premier orifice 37 du corps de roue 3 présente une forme circulaire tandis que le second orifice 67 dans le talon 53 présente une forme de haricot représentée en transparence par une ligne discontinue. La goupille 7 n'est pas représentée. Dans cette seconde variante, la forme allongée du second orifice 67 est invisible et inaccessible à l'état assemblé de l'outil. Outre l'aspect esthétique, ceci limite les risques d'accumulation de souillures, par exemple de terre, en fonctionnement.

Dans une troisième variante, le premier orifice 37 du corps de roue 3 et le second orifice 67 dans le talon 53 présentent tous deux une forme allongée dans la circonférence, par exemple identiques. Dans ce cas, la tolérance du positionnement relatif est doublée.

Dans les exemples décrits jusqu'ici, le corps de roue 3 comprend des premiers orifices 37 de formes analogues les unes aux autres, en particulier circulaires ou allongés dans la circonférence. Le pneumatique 5 comprend des seconds orifices 67 de formes analogues les unes aux autres, en particulier circulaires ou allongés dans la circonférence. En variante, l'un au moins des premiers orifices 37 du corps de roue 3 peut avoir une forme différente de celle des autres premiers orifices 37 du corps de roue 3. L'un au moins des seconds orifices 67 du pneumatique 5 peut avoir une forme différente de celle des autres seconds orifices 67 du pneumatique 5. Par exemple, l'un des premiers orifices 37 du corps de roue 3, respectivement l'un des seconds orifices 67 du pneumatique 5, peut présenter un contour sensiblement circulaire tandis que les autres premiers orifices 37 du corps de roue 3, respectivement les autres seconds orifices 67 du pneumatique 5, présentent un contour allongé dans la circonférence. Ce premier orifice 37 circulaire du corps de roue 3, respectivement ce second orifice 67 circulaire du pneumatique 5 peut alors être qualifié d' "orifice d'indexation" tandis que les orifices allongés peuvent être qualifiés de "secondaires". Une telle configuration, optionnelle, est particulièrement adaptée à un assemblage en deux temps tel que décrit ci-après.

Un procédé fabrication de l'outil agricole peut être décomposé selon les étapes suivantes :
a) mouler par injection un corps de roue 3 présentant deux faces principales 31 ; 33 et une gorge périphérique 35 s'ouvrant radialement vers l'extérieur et ménagée entre les deux faces principales 31 ; 33,
b) démouler le corps de roue 3,
c) placer un pneumatique 5 autour du corps de roue 3 sur au moins une partie de la circonférence du corps de roue 3, ledit corps de roue 3 incluant une partie externe 51 sensiblement annulaire et un talon 53 faisant saillie de la partie externe 51 radialement vers l'intérieur, le placement du pneumatique 5 autour du corps de roue 3 incluant l'insertion du talon 53 dans la gorge périphérique 35,
d) insérer au moins une goupille 7 depuis l'une des faces principales 31 ; 33 du corps de roue 3, au travers du corps de roue 3, jusqu'à faire saillie dans la gorge périphérique 35 en pénétrant au moins partiellement dans le talon 53 de manière à former un verrou radial bloquant le pneumatique 5 autour du corps de roue 3.

Le placement du pneumatique 5 autour du corps de roue 3 et l'insertion du talon 53 dans la gorge périphérique 35 peut être réalisé complètement, c'est-à-dire sur toute la circonférence du corps de roue 3, avant d'insérer une première goupille 7, puis éventuellement les suivantes. En variante, l'assemblage peut être réalisé en deux temps. Dans ce cas, le pneumatique 5 est placé autour du corps de roue 3 seulement sur une partie de la circonférence du corps de roue 3. Le talon 53 est inséré dans la gorge périphérique 35 seulement sur cette partie de la circonférence. À ce stade, le pneumatique 5 reste au repos, non serré élastiquement autour du corps de roue 3. Les forces de frottement entre le corps de roue 3 et le pneumatique 5 sont négligeables. L'ajustement de la mise en regard d'un premier orifice 37 du corps de roue 3 et d'un second orifice 67 du pneumatique 5 l'un avec l'autre peut donc être réalisé sans effort. Le pneumatique 5 est indexé par rapport au corps de roue 3. Lorsque la mise en regard du premier orifice 37 et du second orifice 67 l'un avec l'autre est correcte, une première goupille 7 peut y être insérée. Ainsi, l'interaction de la première goupille 7, et du couple premier orifice 37 et second orifice 67 forme un verrou anti-rotation du pneumatique 5 autour du corps de roue 3. Ensuite, le placement du pneumatique 5 autour du corps de roue 3 et l'insertion du talon 53 dans la gorge périphérique 35 peuvent être complétés sur la partie de circonférence restante. Le verrou anti-rotation limite les risques de rotation involontaire du pneumatique 5 autour du corps de roue 3. Les couples premier orifice 37 et second orifice 67 restants sont ainsi facilement mis en regard deux à deux. Les goupilles 7 restantes peuvent être mise en place.

Si le corps de roue 3 et/ou le pneumatique 5 présentent chacun des orifices avec des formes différentes les unes des autres, tel qu'au moins un orifice d'indexation et des orifices secondaires, alors les orifices d'indexation peuvent être goupillés dans un premier temps, avant le placement du pneumatique autour du corps de roue sur toute sa circonférence, puis dans le second temps, les orifices secondaires sont goupillés après que le pneumatique ait été placé autour du corps de roue 3 sur toute la circonférence. Ainsi, les orifices d'indexation, par exemple de forme circulaire, sont aisément alignés puis goupillés et forment un verrouillage anti-rotation précis tandis que les orifices secondaires, par exemple de forme allongée, peuvent être goupillés même lorsque les mise en regard sont approximatives, par exemple à cause d'imprécisions de fabrication ou de déformations.

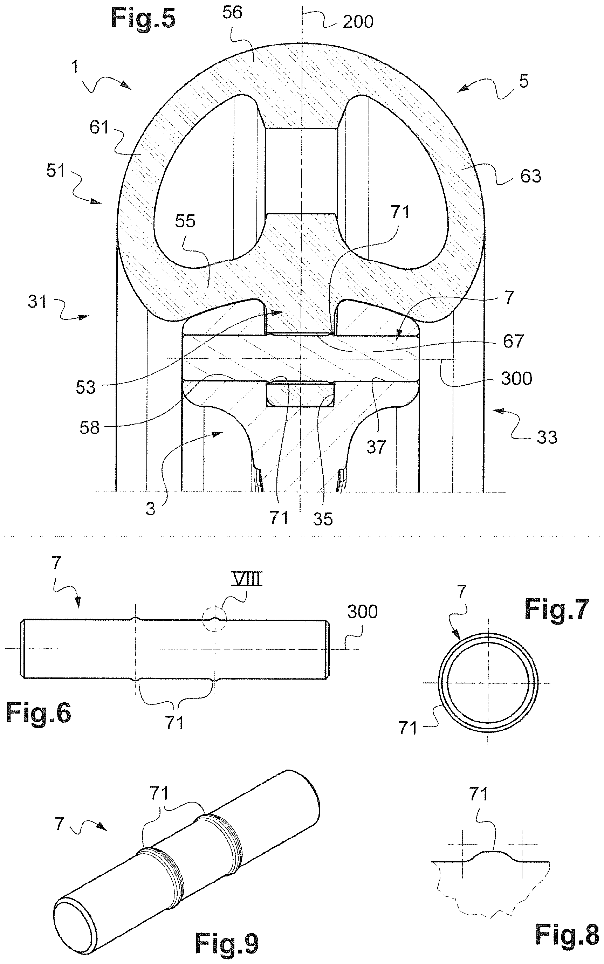

En variante, lors du montage du pneumatique 5 autour du corps de roue 3, le talon 53 est dépourvu de second orifice 67. Le second orifice 67 est percé postérieurement au montage du pneumatique 5 autour du corps de roue 3, par exemple en utilisant le premier orifice 37 comme guide pour le perçage. Le second orifice 67 peut être percé lors d'une opération spécifique ou, par exemple, au moyen d'une vis de type auto foreuse et auto taraudeuse. Une telle vis peut former pièce de blocage. Autrement dit, la vis utilisée pour percer le second orifice 67 forme la goupille en remplacement du barreau sensiblement cylindrique du mode de réalisation des figures 6 à 9 qui sera décrit ensuite.

Dans le mode de réalisation des figures 1 à 9, un orifice supplémentaire 58 est en outre ménagé dans le corps de roue 3 débouchant d'une part dans la gorge périphérique 35 sensiblement en regard du premier orifice 37 et d'autre part dans l'autre des deux faces principales, soit ici la première face 31. Le premier orifice 37 et l'orifice supplémentaire 58 peuvent être vus comme deux portions d'un même orifice dans lequel vient s'insérer la goupille 7. Le premier orifice 37 et l'orifice supplémentaire 58 peuvent être obtenus au cours d'une même opération de perçage. Une telle configuration symétrique par rapport au plan médian 200 permet un montage-démontage depuis l'une ou l'autre au choix des deux faces principales 31, 33.

En variante, l'orifice supplémentaire 58 n'est pas formé lors de la fabrication du corps de roue 3 et est absent lors du montage du pneumatique 5 autour du corps de roue 3. L'orifice supplémentaire 58 est percé en utilisant le premier orifice 37 comme guide pour le perçage. L'orifice supplémentaire 58 peut être percé lors d'une opération spécifique ou, par exemple, suite au perçage du second orifice 67 par une vis de type auto foreuse et auto taraudeuse tel que mentionné ci-avant. Dans ce cas, la vis vient s'enfoncer dans le talon 53 en le taraudant. Puis, la vis vient s'enfoncer dans le corps de roue 3, en le taraudant à son tour, en regard du premier orifice 37. La vis peut être sélectionnée courte, de sorte que l'extrémité taraudeuse ne traverse pas le corps de roue 3 de part en part et que l'orifice supplémentaire 58 reste borgne et s'ouvre seulement du côté de la gorge périphérique 35.

La goupille 7, représentée isolée sur les figures 6 à 9, prend ici la forme d'un barreau sensiblement cylindrique, ou pion.

Le barreau comprend deux nervures 71 annulaires faisant saillie de la surface généralement cylindrique du barreau. Les nervures 71 forment des augmentations locales du diamètre du barreau. Le diamètre du barreau et les dimensions des nervures 71 sont agencés en correspondance des diamètres du premier orifice 37 et de l'orifice supplémentaire 58 de sorte que le barreau s'y insère à force. Pour déloger la goupille 7 et déverrouiller le talon 53, une force est appliquée sur l'une des extrémités de la goupille 7, par exemple au moyen d'un outil du type chasse-goupille. En position verrouillée telle que représentée en figure 5, les nervures 71 s'opposent au coulissement du barreau.

En variante, le barreau comprend une section centrale de grand diamètre située entre deux sections d'extrémités de petits diamètres. Autrement dit, les deux nervures 71 sont remplacées par une section continue, ou bossage central, s'étendant axialement sur une portion équivalente à celle délimitée entre les deux nervures 71. Une telle section est agencée pour s'opposer au coulissement du barreau dans le corps de roue 3.

La longueur du barreau est adaptée de sorte qu'en position verrouillée les extrémités opposées du barreau viennent sensiblement en affleurement, respectivement de la première face principale 31 et de la seconde face principale 33. Ici, les extrémités du barreau présentent chacune un chanfrein. Les chanfreins peuvent être absents, en particulier lorsqu'il est souhaitable de réduire les aspérités de l'outil en fonctionnement pour limiter l'accumulation de terre et salissures en fonctionnement.

En variante, le barreau présente une ou plusieurs sections de diamètres décroissants depuis la face d'insertion vers la face opposé, de la droite vers la gauche sur la figure 4. Par exemple, la goupille 7 peut présenter une portion d'extrémité d'insertion, à gauche sur les figures, sensiblement tronconique. Ainsi, l'opération d'insertion de la goupille 7 est facilitée.

Dans l'exemple décrit ici, les goupilles 7 sont réalisées en plastique, par exemple du polypropylène. Les goupilles 7 peuvent aussi être réalisées en matériaux métalliques.

Dans les modes de réalisation suivants, les pièces similaires à celles du mode de réalisation des figures 1 à 9 portent des références identiques.

Il est maintenant fait référence à la figure 10. L'outil 101 qui y est représenté est similaire à celui des figures précédentes et s'en distingue par la forme de la partie externe 51 du pneumatique 5 et par une partie du verrou, à gauche sur les figures. L'orifice supplémentaire présente deux portions :
- une première portion 68 débouchant dans la gorge périphérique 35 et de diamètre sensiblement égal à celui du premier orifice 37, et
- une seconde portion 69 dans l'alignement de la première portion 68 et de diamètre sensiblement inférieur. Les deux portions 68, 69 sont reliées l'une à l'autre par un épaulement 70 annulaire orienté vers la gorge périphérique 35.

Le barreau formant goupille 107 est raccourci par rapport à celui des figures précédentes, de sorte qu'à l'insertion de ladite goupille 107 depuis la seconde face principale 33, l'extrémité avant dans le sens de l'insertion, à gauche sur la figure 10, vient en butée contre l'épaulement 70. L'extrémité opposée de la goupille 107, à droite sur la figure 10, vient sensiblement à l'affleurement de la seconde face principale 33 du corps de roue.

Une telle configuration du verrou empêche que la goupille 107 ne soit enfoncée trop profondément lors du montage. Une nervure 71 du côté gauche est superflue. Elle est donc absente par rapport au mode de réalisation des figures précédentes. La seconde portion 69 présente un diamètre suffisant pour le passage d'un outil du type chasse-goupille. La seconde portion 69 permet de préserver le caractère démontable, ou déverrouillable, de l'assemblage.

Il est maintenant fait référence à la figure 11. L'outil 102 qui y est représenté est similaire à celui des figures 1 à 5. L'outil 102 s'en distingue par un corps de roue formé par l'assemblage des deux flasques 103, 104 homologues décrit ci-avant et par la goupille 117.

La goupille 117 comprend ici un couple boulon-écrou en remplacement du barreau des figures 1 à 5. Le boulon 118 présente une tête hexagonale, une portion filetée à l'extrémité opposée à la tête et une portion non filetée entre la tête et la portion filetée. Contrairement à la goupille 7 sous forme de barreau, le diamètre du boulon 118 est sensiblement inférieur aux diamètres des orifices dans lesquels il s'insère de manière à être inséré sans effort. Il est maintenu en place grâce au boulon 119 qui vient se visser sur la partie filetée du boulon 118 et s'appuyer sur la face principale opposée à la tête du boulon 118, soit ici la première face principale31.

L'absence de filetage sur la portion du boulon 118 qui se loge dans le second orifice 67 du talon 53 limite les risques de détérioration de l'alésage du second orifice 67, notamment par les effets du cisaillement et de l'abrasion, lors du fonctionnement de l'outil 102.

Le couple boulon-écrou forme à la fois un verrou radial du pneumatique et aussi un moyen de serrage des flasques 103, 104 l'un contre l'autre. Une telle combinaison est optionnelle. En variante, une goupille sous forme d'un couple boulon-écrou peut être mise en œuvre avec un corps de roue d'un seul tenant. La goupille 7 sous forme de barreau peut aussi être mise en œuvre avec un corps de roue obtenu par assemblage de flasques.

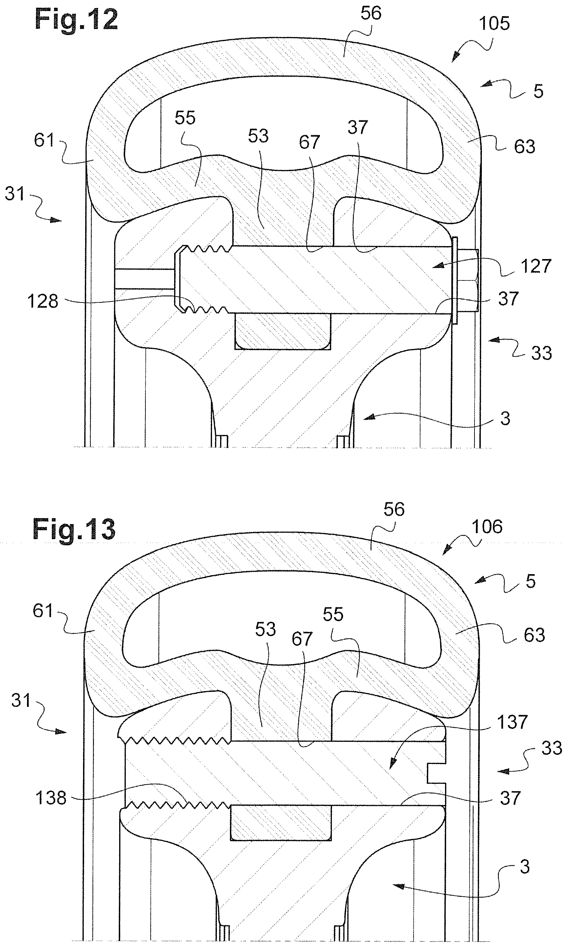

Il est maintenant fait référence à la figure 12. L'outil 105 qui y est représenté est similaire à celui de la figure 10 et s'en distingue par la goupille 127 et par un orifice supplémentaire 128, en partie gauche de la figure.

L'orifice supplémentaire 128 est borgne et débouche seulement dans la gorge périphérique 35. La goupille 127 prend la forme d'un boulon, ici avec une tête hexagonale à une extrémité et un filetage sur une portion d'extrémité opposée. L'orifice supplémentaire 128 présente un filetage femelle correspondant.

De manière similaire au boulon 117, le diamètre du boulon 127 est sensiblement inférieur au diamètre du premier orifice 37 dans lequel il est disposé. Il est maintenu en place par vissage. La portion du boulon 127 venant se loger dans le second orifice 67 du talon 53 est dépourvue de filetage. Le démontage est assuré par dévissage.

Il est maintenant fait référence à la figure 13. L'outil 106 qui y est représenté est similaire à celui de la figure 12 et s'en distingue par l'absence de tête de la goupille 137 et par l'orifice supplémentaire 138, en partie gauche de la figure.

L'orifice supplémentaire 138 est traversant et débouche dans la première face principale 31 du corps de roue. L'orifice supplémentaire 138 est en outre pourvu d'un filetage femelle s'étendant sensiblement sur sa longueur. La goupille 137 prend la forme d'un boulon similaire au boulon 127 dont la portion filetée est allongée pour correspondre au filetage femelle de l'orifice supplémentaire 138. Une empreinte de vissage, ici une fente pour tournevis plat, est ménagée à l'extrémité du boulon 137 opposée à la partie filetée.

L'absence de tête permet de visser la goupille 137 jusqu'à affleurement avec chacune des faces principales 31, 33 tout en restant facilement démontable par vissage-dévissage.

Il est maintenant fait référence à la figure 14. Dans ce mode de réalisation, le premier orifice 141 de l'outil 108 est pourvu d'un filetage femelle sur toute sa longueur. Le corps de roue est dépourvu d'orifice supplémentaire, ici en partie gauche. Contrairement aux seconds orifices décrits jusqu'ici qui sont traversants, le second orifice 143 dans le talon du pneumatique est borgne et ouvert sensiblement en regard du premier orifice 141. La goupille 147 prend ici la forme d'un goujon. La goupille 147 présente une portion filetée apte à se visser dans le premier orifice 141. La partie filetée se prolonge par une portion non filetée qui vient se loger dans le second orifice 143 à l'état verrouillé. De manière similaire au mode de réalisation de la figure 13, la goupille 147 est dépourvue de tête. Une empreinte de vissage est ménagée dans l'extrémité accessible depuis la seconde face principale 33 à l'état verrouillé.

Dans les exemples décrits jusqu'ici, les premiers orifices 37, 141 du corps de roue 3 sont disposés sur un cercle d'un premier diamètre centré sur un axe de révolution du corps de roue 3, ici répartis à équidistance les uns des autres. Les premiers orifices 37, 141 du corps de roue 3 sont au nombre de trois. De manière analogue, les seconds orifices 67 dans le talon 53 du pneumatique 5 sont disposés sur un cercle d'un second diamètre centré sur un axe de révolution du pneumatique 5, ici répartis à équidistance les uns des autres. Les seconds orifices 67 dans le talon 53 du pneumatique 5 sont au nombre de trois. Le diamètre interne de la semelle 55 du pneumatique 5 au repos est sensiblement inférieur au diamètre externe du corps de roue 3. Au repos, le premier diamètre est donc sensiblement supérieur au second diamètre. Les premiers orifices 37, 141 et les seconds orifices 67 sont sensiblement appariés. En variante, les paires peuvent être en nombre différent de trois et/ou non équidistantes les uns des autres dans la circonférence.

Les modes de réalisation présentés, notamment aux figures 10 à 14, présentent des combinaisons de caractéristiques qui fournissent des avantages particuliers. Néanmoins, et sauf incompatibilité manifeste, les caractéristiques des modes de réalisations décrits ci-avant sont généralement combinables entre elles.

L'outil selon l'invention se définit au moins en partie par la coopération de plusieurs pièces. Or ces pièces peuvent être fournies :
- assemblées les unes avec les autres en un outil prêt à l'usage,
- ensemble à l'état démonté sous forme de kit, ou encore
- séparées les unes des autres, par exemple un pneumatique vendu seul pour remplacer un pneumatique usagé sur un corps de roue préexistant.

L'invention ne se limite pas aux exemples d'outils agricoles décrits ci-avant, seulement à titre d'exemple, mais elle englobe toutes les variantes que pourra envisager l'homme de l'art dans le cadre des revendications ci-après, notamment sous forme d'outil, de corps de roue, de pneumatique ou de kit de pièces compatibles.

## Revendications

1. Outil agricole (1, 101, 102, 105, 106, 108) comprenant :
- un corps de roue (3) présentant deux faces principales (31 ; 33) et une gorge périphérique (35) ouverte radialement vers l'extérieur ménagée entre les deux faces principales (31 ; 33),
- un pneumatique (5) incluant une partie externe (51) sensiblement annulaire et un talon (53) faisant saillie de la partie externe (51) radialement vers l'intérieur, le talon (53) étant conformé de manière à se loger dans la gorge (35) au montage du pneumatique (5) autour du corps de roue (3), et
- un verrou radial bloquant le pneumatique (5) autour du corps de roue (3),
**caractérisé en ce que** le verrou radial comprend :
- un premier orifice (37 ; 141) ménagé dans le corps de roue (3) débouchant d'une part dans la gorge (35) et d'autre part dans l'une des deux faces principales (31 ; 33),
- au moins un second orifice (67) ménagé dans le talon (53) du pneumatique (5) et ouvert sensiblement en regard du premier orifice (37 ; 141), et
- une goupille (7 ; 107 ; 117 ; 127 ; 137 ; 147) disposée dans le premier orifice (37 ; 141) et le second orifice (67).

2. Corps de roue (3) pour outil agricole (1, 101, 102, 105, 106, 108) présentant deux faces principales (31 ; 33) et une gorge périphérique (35) ouverte radialement vers l'extérieur ménagée entre les deux faces principales (31 ; 33), la gorge périphérique (35) étant conformée de manière à recevoir un talon (53) d'un pneumatique (5) au montage dudit pneumatique (5) autour du corps de roue (3),
**caractérisé en ce qu'**au moins un premier orifice (37 ; 141) est ménagé dans le corps de roue (3) débouchant d'une part dans la gorge (35) et d'autre part dans l'une des deux faces principales (31 ; 33).

3. Corps de roue (3) selon la revendication 2, dans lequel la gorge (35) est dépourvue de surface de retenue orientée radialement vers l'intérieur.

4. Corps de roue (3) selon l'une des revendications 2 et 3, dans lequel un orifice supplémentaire (58 ; 128 ; 138) est ménagé dans le corps de roue (3) débouchant dans la gorge (35) sensiblement en regard de l'au moins un premier orifice (37 ; 141).

5. Corps de roue (3) selon la revendication 4, dans lequel l'orifice supplémentaire (58 ; 138) est traversant et débouche en outre dans une des faces principales (31 ; 33).

6. Corps de roue (3) selon l'une des revendications 2 à 5, dans lequel l'au moins un premier orifice (37 ; 141) et/ou l'orifice supplémentaire (58 ; 128 ; 138) est pourvu d'un filetage.

7. Pneumatique (5) pour outil agricole (1, 101, 102, 105, 106, 108) incluant une partie externe (51) sensiblement annulaire et un talon (53) faisant saillie de la partie externe (51) radialement vers l'intérieur, le talon (53) étant conformé de manière à se loger dans une gorge (35) d'un corps de roue (3) au montage du pneumatique (5) autour dudit corps de roue (3),
**caractérisé en ce qu'**au moins un orifice (67 ; 143) est ménagé dans le talon (53) et s'ouvre dans une surface latérale du talon (53).

8. Pneumatique (5) selon la revendication 7, dans lequel le talon (53) est dépourvu de surface de retenue orientée radialement vers l'extérieur.

9. Kit d'outil agricole (1, 101, 102, 105, 106, 108) comprenant :
- un corps de roue (3) présentant deux faces principales (31 ; 33) et une gorge périphérique (35) ouverte radialement vers l'extérieur et ménagée entre les deux faces principales (31 ; 33), la gorge périphérique (35) étant conformée de manière à recevoir un talon (53) d'un pneumatique (5) au montage dudit pneumatique (5) autour du corps de roue (3), au moins un premier orifice (37 ; 141) étant ménagé dans le corps de roue (3) débouchant d'une part dans la gorge (35) et d'autre part dans l'une des deux faces principales (31 ; 33), et
- au moins une goupille (7 ; 107 ; 117 ; 127 ; 137 ; 147) agencée pour s'insérer dans l'au moins un premier orifice (37 ; 141) du corps de roue (3) depuis la face principale (31 ; 33) en faisant saillie dans la gorge périphérique (35).

10. Kit selon la revendication 9, dans lequel l'au moins une goupille (117 ; 127 ; 137 ; 147) comprend au moins une portion filetée de manière à pouvoir fixer par vissage la goupille (117 ; 127 ; 137 ; 147) au corps de roue (3).

11. Kit selon la revendication 9 ou 10, dans lequel le corps de roue comprend deux flasques (103, 104) formant respectivement l'une et l'autre des deux faces principales (31 ; 33) à l'état assemblés l'un avec l'autre, la goupille (117) étant agencée de manière à maintenir les deux flasques (103, 104) assemblés l'un à l'autre.

12. Kit selon l'une des revendications 9 à 11, comprenant en outre au moins un pneumatique (5) selon l'une des revendications 7 et 8.

13. Procédé de fabrication d'un outil agricole (1, 101, 102, 105, 106, 108) selon la revendication 1 comprenant les étapes suivantes :
a) mouler par injection le corps de roue (3),
b) démouler le corps de roue (3),
c) placer le pneumatique (5) autour du corps de roue (3) sur au moins une partie de la circonférence du corps de roue (3), le placement du pneumatique (5) autour du corps de roue (3) incluant l'insertion du talon (53) dans la gorge périphérique (35),
d) insérer au moins une goupille (7) depuis l'une des faces principales (31 ; 33) du corps de roue (3), au travers du corps de roue (3), jusqu'à faire saillie dans la gorge périphérique (35) en pénétrant au moins partiellement dans le talon (53) de manière à former un verrou radial bloquant le pneumatique (5) autour du corps de roue (3).

## Patentansprüche

1. Landwirtschaftliches Gerät (1, 101, 102, 105, 106, 108), Folgendes umfassend:
- einen Radkörper (3), der zwei Hauptflächen (31; 33) und eine radial nach außen hin offene, zwischen den beiden Hauptflächen (31; 33) vorgesehene Umfangsrille (35) aufweist,
- einen Luftreifen (5), der einen im Wesentlichen ringförmigen Außenteil (51) und einen Absatz (53) aufweist, der radial nach innen von dem Außenteil (51) vorsteht, wobei der Absatz (53) so ausgelegt ist, dass er bei Montage des Luftreifens (5) um den Radkörper (3) in der Rille (35) Platz findet, und
- eine radiale Sperre, die den Luftreifen (5) um den Radkörper (3) herum blockiert, **dadurch gekennzeichnet, dass** die radiale Sperre Folgendes umfasst:
- eine erste Öffnung (37; 141), die in dem Radkörper (3) vorgesehen ist und einerseits in die Rille (35) und andererseits in eine der beiden Hauptflächen (31; 33) mündet,
- mindestens eine zweite Öffnung (67), die in dem Absatz (53) des Luftreifens (5) vorgesehen und im Wesentlichen gegenüber der ersten Öffnung (37; 141) offen ist, und
- einen in der ersten Öffnung (37; 141) und der zweiten Öffnung (67) angeordneten Stift (7; 107; 117; 127; 137; 147).

2. Radkörper (3) für landwirtschaftliches Gerät (1, 101, 102, 105, 106, 108), der zwei Hauptflächen (31; 33) und eine radial nach außen offene, zwischen den beiden Hauptflächen (31; 33) vorgesehene Umfangsrille (35) aufweist, wobei die Umfangsrille (35) so ausgelegt ist, dass sie bei Montage des Luftreifens (5) um den Radkörper (3) einen Absatz (53) eines Luftreifens (5) aufnimmt,
**dadurch gekennzeichnet, dass** mindestens eine erste einerseits in die Rille (35) und andererseits in eine der beiden Hauptflächen (31; 33) mündende Öffnung (37; 141) in dem Radkörper (3) vorgesehen ist.

3. Radkörper (3) nach Anspruch 2, wobei die Rille (35) ohne eine radial nach innen gerichteten Haltefläche vorliegt.

4. Radkörper (3) nach einem der Ansprüche 2 und 3, wobei eine zusätzliche Öffnung (58; 128; 138) in dem Radkörper (3) vorgesehen ist, die in die Rille (35) im Wesentlichen gegenüber der mindestens einen ersten Öffnung (37; 141) mündet.

5. Radkörper (3) nach Anspruch 4, wobei die zusätzliche Öffnung (58; 138) durchgängig ist und weiter in eine der Hauptflächen (31; 33) mündet.

6. Radkörper (3) nach einem der Ansprüche 2 bis 5, wobei die mindestens eine erste Öffnung (37; 141) und/oder die zusätzliche Öffnung (58; 128; 138) mit einem Gewinde versehen ist.

7. Luftreifen (5) für landwirtschaftliches Gerät (1, 101, 102, 105, 106, 108), einen im Wesentlichen ringförmigen Außenteil (51) und einen Absatz (53) enthaltend, der von dem Außenteil (51) radial nach innen ragt, wobei der Absatz (53) so ausgelegt ist, dass er bei Montage des Luftreifens (5) um den Radkörper (3) in einer Rille (35) eines Radkörpers (3) Platz findet,
**dadurch gekennzeichnet, dass** mindestens eine Öffnung (67; 143) in dem Absatz (53) vorgesehen ist und sich in einer Seitenfläche des Absatzes (53) öffnet.

8. Luftreifen (5) nach Anspruch 7, wobei der Absatz (53) ohne eine radial nach außen gerichteten Haltefläche vorliegt.

9. Bausatz für landwirtschaftliches Gerät (1, 101, 102, 105, 106, 108), Folgendes umfassend:
- einen Radkörper (3), der zwei Hauptflächen (31; 33) und eine Umfangsrille (35) aufweist, die radial nach außen offen und zwischen den beiden Hauptflächen (31; 33) angeordnet ist, wobei die Umfangsrille (35) so ausgelegt ist, dass sie bei Montage des Reifens (5) um den Radkörper (3) herum einen Absatz (53) eines Luftreifens (5) aufnimmt, wobei mindestens eine erste Öffnung (37; 141) in dem Radkörper (3) vorgesehen ist, die zum Einen in die Rille (35) und zum Anderen in eine der beiden Hauptflächen (31; 33) mündet, und
- mindestens einen Stift (7; 107; 117; 127; 137; 147), der zum Einführen in die mindestens eine erste Öffnung (37; 141) des Radkörpers (3) von der Hauptfläche (31; 33) aus durch Vorstehen in die Umfangsrille (35) angeordnet ist.

10. Bausatz nach Anspruch 9, wobei der mindestens eine Stift (117; 127; 137; 147) mindestens einen Gewindeabschnitt umfasst, so dass der Stift (117; 127; 137; 147) mit dem Radkörper (3) verschraubt werden kann.

11. Bausatz nach Anspruch 9 oder 10, wobei der Radkörper zwei Flansche (103, 104) umfasst, die jeweils beide der zwei Hauptflächen (31; 33) im miteinander zusammengebauten Zustand bilden, wobei der Stift (117) so angeordnet ist, dass er die beiden miteinander verbundenen Flansche (103, 104) hält.

12. Bausatz nach einem der Ansprüche 9 bis 11, ferner umfassend mindestens einen Luftreifen (5) nach einem der Ansprüche 7 und 8.

13. Verfahren zur Herstellung eines landwirtschaftlichen Gerätes (1, 101, 102, 105, 106, 108) nach Anspruch 1, umfassend die folgenden Schritte:
a) Spritzgießen des Radkörpers (3),
b) Entformen des Radkörpers (3),
c) Anordnen des Reifens (5) um den Radkörper (3) herum auf mindestens einem Teil des Umfangs des Radkörpers (3), Anordnen des Reifens (5) um den Radkörper (3) herum, einschließlich Einsetzen des Absatzes (53) in die Umfangsrille (35),
d) Einsetzen mindestens eines Stiftes (7) von einer der Hauptflächen (31; 33) des Radkörpers (3) durch den Radkörper (3), bis er in die Umfangsrille (35) ragt, indem er mindestens teilweise in den Absatz (53) vordringt, um eine radiale Sperre zu bilden, die den Reifen (5) um den Radkörper (3) herum blockiert.

## Claims

1. Agricultural implement (1, 101, 102, 105, 106, 108) comprising:
- a wheel body (3) having two main faces (31; 33) and a peripheral groove (35), opening radially outward, formed between the two main faces (31; 33),
- a tire (5) including a substantially annular outer part (51) and a bead (53) projecting radially inward from the outer part (51), the bead (53) being shaped so as to be housed in the groove (35) when the tire (5) is mounted around the wheel body (3), and
- a radial lock which locks the tire (5) around the wheel body (3),
**characterized in that** the radial lock comprises:
- a first aperture (37; 141) formed in the wheel body (3), opening into the peripheral groove (35) on the one hand, and onto one of the two main faces (31; 33) on the other hand,
- at least a second aperture (67) formed in the bead (53) of the tire (5), opening substantially facing the first aperture (37; 141), and
- a pin (7; 107; 117; 127; 137; 147) placed in the first aperture (37; 141) and the second aperture (67).

2. Wheel body (3) for an agricultural implement (1, 101, 102, 105, 106, 108) having two main faces (31; 33) and a peripheral groove (35), opening radially outward, formed between the two main faces (31; 33), the peripheral groove (35) being shaped so as to receive a bead (53) of a tire (5) when said tire (5) is mounted around the wheel body (3), **characterized in that** at least a first aperture (37; 141) is formed in the wheel body (3), opening into the peripheral groove (35) on the one hand, and onto one of the two main faces (31; 33) on the other hand.

3. Wheel body (3) according to Claim 2, wherein the groove (35) has no radially inwardly oriented retaining surface.

4. Wheel body (3) according to either of Claims 2 and 3, wherein an additional aperture (58; 128; 138) is formed in the wheel body (3), opening into the groove (35) substantially facing the at least one first aperture (37; 141).

5. Wheel body (3) according to Claim 4, wherein the additional aperture (58; 138) is a through hole, and also opens onto one of the main faces (31; 33).

6. Wheel body (3) according to any of Claims 2 to 5, wherein the at least one first aperture (37; 141) and/or the additional aperture (58; 128; 138) is provided with a thread.

7. Tire (5) for an agricultural implement (1, 101, 102, 105, 106, 108) including a substantially annular outer part (51) and a bead (53) projecting radially inward from the outer part (51), the bead (53) being shaped so as to be housed in a groove (35) of a wheel body (3) when the tire (5) is mounted around said wheel body (3),
**characterized in that** at least one aperture (67; 143) is formed in the bead (53) and opens onto a lateral surface of the bead (53).

8. Tire (5) according to Claim 7, wherein the bead (53) has no radially outwardly oriented retaining surface.

9. Agricultural implement kit (1, 101, 102, 105, 106, 108) comprising:
- a wheel body (3) having two main faces (31; 33) and a peripheral groove (35) opening radially outward and formed between the two main faces (31; 33), the peripheral groove (35) being shaped so as to receive a bead (53) of a tire (5) when said tire (5) is mounted around the wheel body (3), at least a first aperture (37; 141) being formed in the wheel body (3) and opening into the groove (35) on the one hand, and into one of the two main faces (31; 33) on the other hand, and
- at least one pin (7; 107; 117; 127; 137; 147) arranged to be inserted into the at least one first aperture (37; 141) in the wheel body (3) from the main face (31; 33), projecting into the peripheral groove (35).

10. Kit according to Claim 9, wherein the at least one pin (117; 127; 137; 147) comprises at least a threaded portion such that the pin (117; 127; 137; 147) can be fastened to the wheel body (3) by screwing.

11. Kit according to Claim 9 or 10, wherein the wheel body comprises two webs (103, 104) forming, respectively, one and the other of the two main faces (31; 33) in the state in which they are assembled with one another, the pin (117) being arranged so as to keep the two webs (103, 104) assembled with one another.

12. Kit according to any of Claims 9 to 11, further comprising at least one tire (5) according to one of Claims 7 and 8.

13. Method for manufacturing an agricultural implement (1, 101, 102, 105, 106, 108) according to Claim 1, comprising the following steps:
a) injection molding the wheel body (3),
b) removing the wheel body (3) from the mold,
c) placing the tire (5) around the wheel body (3) on at least a part of the circumference of the wheel body (3), the placing of the tire (5) around the wheel body (3) including the insertion of the bead (53) into the peripheral groove (35),
d) inserting at least one pin (7) from one of the main faces (31, 33) of the wheel body (3), through the wheel body (3), until it projects into the peripheral groove (35) and penetrates at least partially into the bead (53) so as to form a radial lock which locks the tire (5) around the wheel body (3).
